(19) Europäisches Patentamt
European Patent Office
Office européen des brevets

(11) **EP 2 426 369 B1**

(12) **EUROPÄISCHE PATENTSCHRIFT**

(45) Veröffentlichungstag und Bekanntmachung des Hinweises auf die Patenterteilung:
**21.08.2013 Patentblatt 2013/34**

(51) Int Cl.:
*F16D 65/00* *(2006.01)*    *F16D 65/847* *(2006.01)*

(21) Anmeldenummer: **11009482.8**

(22) Anmeldetag: **06.05.2009**

(54) **Bremsscheibenabdeckung für eine Bremsscheibe einer Scheibenbremse**

Brake disk cover for a brake disk of a disk brake

Tôle de protection de disque pour un disque de frein d'un frein à disques

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **09.05.2008 DE 102008022967**

(43) Veröffentlichungstag der Anmeldung:
**07.03.2012 Patentblatt 2012/10**

(62) Dokumentnummer(n) der früheren Anmeldung(en) nach Art. 76 EPÜ:
**09741876.8 / 2 276 945**

(73) Patentinhaber: **KNORR-BREMSE Systeme für Nutzfahrzeuge GmbH**
**80809 München (DE)**

(72) Erfinder:
• **Pahle, Wolfgang**
**89707 Bad Wiessee (DE)**
• **Schubert, Michael**
**80335 München (DE)**
• **Lathwesen, Holger**
**85395 Heigenhausen (DE)**
• **Preitsameter, Josef**
**80789 München (DE)**

(74) Vertreter: **Mattusch, Gundula**
**C/o Knorr-Bremse AG**
**Moosacherstrasse 80**
**80809 München (DE)**

(56) Entgegenhaltungen:
**EP-A- 0 786 606    MX-A- PA05 012 473**
**US-A- 4 257 498    US-A1- 2008 053 762**

EP 2 426 369 B1

**Beschreibung**

Die Erfindung betrifft eine Bremsscheibenabdeckung für eine Bremsscheibe einer Scheibenbremse nach dem Oberbegriff des Anspruchs 1.

Derartige Bremsscheibenabdeckungen sind aus dem Stand der Technik an sich bekannt. Es wird insofern auf die DE 101 55 645 A1, die DE 103 48 001 A1 und die EP 1 191 245 A2 verwiesen. Sie weisen aber eine Reihe von Mängeln auf, die es zu beheben gilt. Weiteren Stand der Technik zeigen die EP 1 577 578 B1 und die SE 523 603 C2 sowie die MX PA05012473 A. Die in der letztgenannten Schrift dargestellte Bremsscheibenabdeckung weist zu beiden Axialseiten der Bremsscheibe hin schützende Abdeckungsbereiche auf.

EP 0 786 606 A beschreibt eine Befestigungsanordnung für eine Rostschutzabdeckung einer Bremsscheibe in einer Scheibenbremse für ein Fahrzeug. Mehrere vorstehende Abschnitte stehen von einer Wand der Rostschutzabdeckung nach innen hervor. In jedem der vorstehenden Abschnitte ist eine Öffnung eingebracht. An einem äußeren Ende der Staubabdeckung ist ein Eingriffsabschnitt so angeformt, dass der Eingriffsabschnitt in die Öffnung eingreift. Die Rostschutzabdeckung ist an einer Staubabdeckung befestigt. Ein Befestigungsvorgang der Rostschutzabdeckung kann durch eine Sichtkontrolle eines Eingriffs der Rostschutzabdeckung mit der Staubabdeckung erleichtert sein.

So ist an den bekannten Bremsscheibenabdeckungen in der Regel das Schwingungsverhalten zu verbessern.

Die Lösung dieses Problems ist die Aufgabe der Erfindung.

Für die Lösung dieses Problems schlägt die Erfindung eine Lösung vor, dass die Bremsscheibenabdeckung eine nicht einer mathematischen Symmetrie folgende Oberflächenkontur aufweist und/oder dass sie wenigstens einen in sich geschwungenen, nicht ebenen Seitenwandbereich aufweist, und dass die Bremsscheibenabdeckung einen zwei- oder mehrteiligen Aufbau aufweist, wobei durch sich überlappende Wandabschnitte wenigstens eine Schmutzlabyrinthanordnung an der Bremsscheibenabdeckung realisiert ist. Diese Maßnahme wirkt auf einfache Weise nachteiligen Resonanzeffekten entgegen, und das derart besonders einfach aufgebaute bzw. realisierte gestaltete Schmutzlabyrinth verhindert wirkungsvoll das Eindringen von Schmutz in den Bereich der Bremsscheibe und optimiert die Kühlung.

Eine weitere, nachteiligen Resonanzeffekten entgegen wirkende Ausführung besteht darin, dass die äußere und/oder die innere Umfangskontur der Bremsscheibenabdeckung jedenfalls abschnittsweise nicht teilkreisförmig sondern von einer Teilkreiskontur abweichend ausgebildet ist. Diese Ausgestaltung trägt auch zu einem gewichtsoptimierten Aufbau bei. Vorzugsweise ist die äußere und/oder die innere Umfangskontur teiloval oder teilelliptisch ausgestaltet.

Daneben und darüber hinaus gilt es den Aufbau der Bremsscheibenabdeckung und ihre Anbindung an das achsfeste Bauteil möglichst vorteilhaft zu gestalten.

Die Lösung dieses Problems ergänzt sich mit den bisher vorgeschlagenen Lösungen aber auch zu einer besonders vorteilhaften Scheibenbremse mit mehreren Vorteilen.

Nach einer weiteren - in Hinsicht auf die bisherige Erfindung nicht zwingenden - Option ist die Bremsscheibenabdeckung mit zueinander winklig ausgerichteten Befestigungsmitteln an dem achsfesten Bauteil, insbesondere dem Bremsträger, befestigt, was die Festigkeit der Anordnung auf einfache Weise optimiert.

Vorzugsweise sind die zueinander winklig ausgerichteten Befestigungsmittel in einfacher Weise als Schrauben ausgebildet. Werden als Schrauben Senkkopfschrauben verwendet, ist es möglich, diese derart zu verschrauben, dass sie nicht über die Oberfläche der Bremsscheibenabdeckung vorstehen, was angesichts der beengten Einbauverhältnisse besonders vorteilhaft ist.

Es ist besonders vorteilhaft, wenn die Schrauben rechtwinklig zueinander ausgerichtet sind. Derart wird auf einfache Weise eine Versteifung der Bremsscheibenabdeckung erreicht.

Besonders bevorzugt sind jeweils wenigstens zwei der Schrauben radial und zwei der Schrauben axial - bezogen auf die Bremsscheibenachse - ausgerichtet. Dabei hat es sich als zweckmäßig erwiesen, wenn die Bremsscheibenabdeckung zweiteilig ausgestaltet ist und wenn das eine der Bremsscheibenteile nur mit radial ausgerichteten und das andere Bremsscheibenteile nur mit axial ausgerichteten Schrauben am achsfesten Bauteil befestigt ist. Ergänzend ist es versteifend und damit zweckmäßig, wenn die Bremsscheibenteile abschnittsweise miteinander verbunden, insbesondere verschweißt sind.

Weitere vorteilhafte Ausgestaltungen sind den übrigen Unteransprüchen zu entnehmen.

Nachfolgend wird die Erfindung anhand eines Ausführungsbeispiels unter Bezug auf die Zeichnung näher beschrieben. Es zeigt:

Fig. 1    eine Seitenansicht einer an einem Bremsträger angeordneten Bremsscheibenabdeckung;

Fig. 2    einen Schnitt durch einen Teilbereich der Bremsscheibenabdeckung aus Fig. 1;

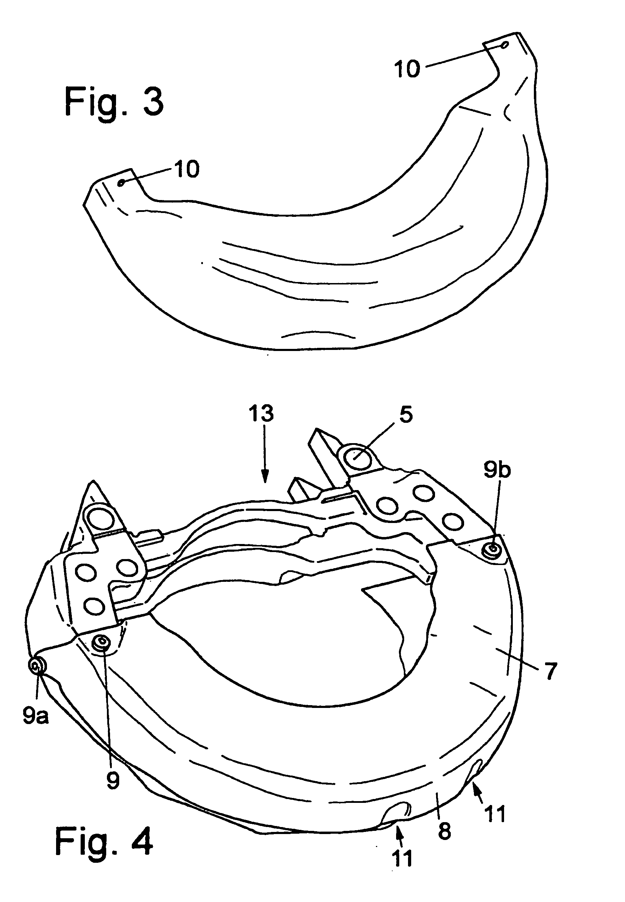

Fig. 3    eine perspektivische Ansicht der Bremsscheibenabdeckung aus Figur 1;

Fig. 4    eine perspektivische Ansicht der Anordnung aus Fig.1;

Fig. 5    einen weiteren Schnitt durch einen Teilbereich der Bremsscheibenabdeckung aus Fig. 1; und

Fig. 6    eine zu Fig. 1 um 90° gedrehte Ansicht der Anordnung aus Fig. 1.

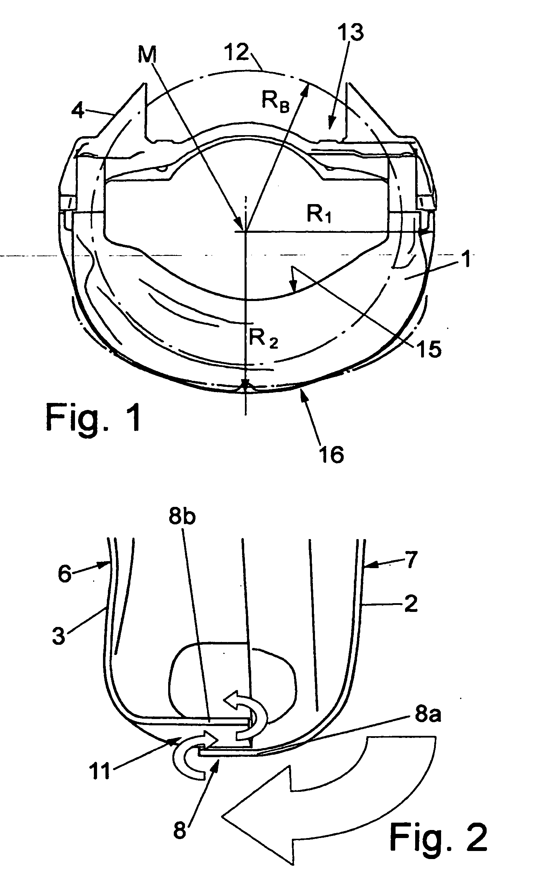

Fig. 1 zeigt eine Bremsscheibenabdeckung 1 für eine in dieser Figur nur durch ihre Mittelachse M und einen gestrichelten Kreis mit dem Radius RB und das Bezugszeichen 12 angedeutete Bremsscheibe einer Scheibenbremse eines Fahrzeugs, von der hier nur ein Bremsträger 4 dargestellt ist. An dem Bremsträger 4 wird ein Bremssattel der Scheibenbremse angeordnet (hier nicht dargestellt).

Die Bremsscheibenabdeckung 1 ist vorzugsweise zweistückig aus zwei Abdeckungsteilen 2, 3 zusammengesetzt, die insbesondere abschnittsweise miteinander verbunden, vorzugsweise verschweißt sind.

Der Bremssattel wird an dem einen sich während der Fahrt sich nicht mit der Radachse drehenden Bauteil wie hier beispielhaft dem Bremsträger 4 angeordnet, wohingegen die Bremsscheibe drehfest mit der sich drehenden Radachse gekoppelt ist. Das achsfeste Bauteil dient auch zum Befestigen der Bremsscheibenabdeckung 1.

Der Bremsträger 4 weist Befestigungsmittel zum Befestigen der Scheibenbremse auf, die hier Bohrungen 5 für sich parallel zur Bremsscheibenachse A erstreckende Sattellagerholme umfassen, auf denen der Bremssattel verschiebbar angeordnet ist.

Die Bremsscheibenabdeckung 1 der Erfindung ist insofern für Scheibenbremsen verschiedenster Konstruktion wie Festsattelbremsen, Schiebesattelbremsen oder Schwenksattelbremsen geeignet. Wenn nachfolgend die Befestigung am Bremsträger 4 beschrieben wird, ist diese lediglich als besonders bevorzugte Ausführung zu verstehen und auf eine Befestigung an einem achsfesten Bauteil zu verallgemeinern.

Die Bremsscheibe 12 ist vorzugsweise in axialer Richtung an der Fahrzeugachse festgelegt. Sie kann aber auch bei einer entsprechenden Dimensionierung der Bremsscheibenabdeckung als verschiebliche Bremsscheibe ausgelegt sein.

Um die Bremsscheibe 12 im Betrieb vor einem Verschmutzen und ggf. vor einer Beschädigung zu schützen, ist an dem Bremsträger die Bremsscheibenabdeckung 1 befestigt, die trogartig den Umfangsrand der Bremsscheibe abschnittsweise einfasst, und zwar insbesondere in einem Umfangsbereich, der nicht von dem Bremssattel eingerahmt ist.

Die Bremsscheibenabdeckung 1 weist zwei Seitenwandbereiche 6, 7 auf, welche einen Teilbereich der Axialseiten der Bremsscheibe abdecken und einen diese seitlichen Wandbereiche verbindenden Grundwandbereich 8, der den Umfangsrand der Bremsscheibe abdeckt.

In der Seitenansicht der Fig. 1 weisen die Seitenwandbereiche 6, 7 eine Bogenform auf und haben einen inneren, näher zum Mittelpunkt M der Bremsscheibe 12 liegenden Umfangsrand und einen äußeren Umfangsrand, der sich über den äußeren Umfangsrand der Bremsscheibe hinaus erstreckt. Die Seitenwandbereiche haben zumindest eine derartige Erstreckung, dass sie Reibringbereiche der Bremsscheibe ganz oder zum überwiegenden Teil abdecken.

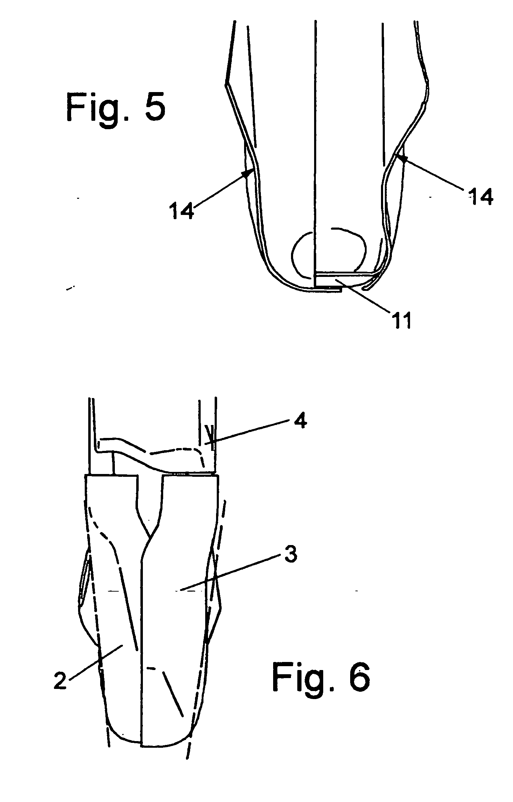

Die Seitenwandbereiche 6, 7 sind nach der bevorzugten erfinderischen Ausgestaltung der Fig. 5 nicht parallel zueinander ausgerichtet sondern vorzugsweise leicht derart winklig, dass der Abstand zwischen diesen beiden Seitenwandbereichen 6, 7 radial von innen nach außen abnimmt. Durch eine nicht ebene Ausgestaltung kann der Abstand zwischen den beiden Seitenwandbereichen lokal auch zunehmen, insgesamt nimmt er vom inneren Umfang der Bremsscheibenabdeckung zum äußeren Umfang der Bremsscheibenabdeckung jedoch ab, insbesondere lassen sich zueinander winklige, die Bremsscheibenabdeckung jeweils außen einhüllende Geraden an die Seitenwandbereiche legen. Vorzugsweise ist diese sich verjüngende Ausgestaltung kontinuierlich über den gesamten Abschnitt, über den sie die Bremsscheibe abdeckt, gegeben.

Die Bremsscheibenabdeckung 1 ist nach einer vorteilhaften weiteren - auch für sich erfinderischen - Ausgestaltung an wenigstens zwei, vorzugsweise vier, Stellen in besonderer Weise mittels Befestigungsmitteln mit dem achsfesten Bauteil, insbesondere dem Bremsträger, verbunden. Als Befestigungsmittel werden vorzugsweise Schrauben eingesetzt. Es ist aber auch alternativ oder ergänzend als Befestigungsmittel wenigstens ein Klemmbereich, eine Niete, ein Lötbereich oder Schweißbereich denkbar.

Vorzugsweise erfolgt die Befestigung mit Hilfe von Schrauben 9, welche Öffnungen 10 in der Bremsscheibenabdeckung 1 durchsetzen und in korrespondierende Gewindebohrungen im Bremsträger 1 eingeschraubt sind.

Vorzugsweise erfolgt die Befestigung jeweils mittels zwei der Schrauben 9 in zwei - vorzugsweise seitlich eines Belagschachtes 13 - voneinander abgewandten Bereichen des Bremsträgers.

Die Befestigung erfolgt vorzugsweise mittels zwei winklig zueinander ausgerichteten Befestigungsmitteln, insbesondere Schrauben 9a, 9b, was auf einfache Weise eine gute Befestigung der Bremsscheibenabdeckung 1 sichert und zur Versteifung der vorzugsweise aus einem Metallblech oder einem Verbundwerkstoff gefertigten Bremsscheibenabdeckung 1 beiträgt.

Dabei ist besonders bevorzugt jeweils eines der beiden Abdeckungsteile 2, 3 - bezogen jeweils auf die Bremsscheibenachse - mit wenigstens einer oder mehr, insbesondere zwei radial ausgerichteten Schrauben 9a (vorzugsweise radial von außen nach innen geschraubten) und das andere der Abdeckungsteile mit wenigstens einer oder mehr, insbesondere zwei axial ausgerichteten Schrauben 9b am Bremsträger befestigt.

Dies ermöglicht einerseits eine leichte Montage und andererseits eine leichte Demontage bei Wartungsarbeiten.

Darüber hinaus wird besonders vorteilhaft eine Art Käfig um die Bremsscheibe ausgebildet, der sich selbst abstützt und eine besonders hohe Eigenfrequenz aufweist, d.h. die Neigung zu nachteiligen Resonanzeffekten während der Fahrt wird verringert.

Insbesondere im Bereich ihres Aussenumfangs ist es besonders vorteilhaft, wenn die Abdeckungsteile 2, 3 zumindest abschnittsweise auch noch direkt miteinander stoffschlüssig und/oder form- und/oder kraftschlüssig verbunden, insbesondere verschweißt oder verklebt sind.

Diese erfinderische Ausgestaltung ist besonders vorteilhaft, in Hinblick auf die sonstigen Merkmale der Erfindung aber nicht zwingend. So ist in Hinsicht auf die weiteren Erfindungen auch eine Befestigung z.B. nur mit axialen Schrauben denkbar.

Die Abdeckbleche sind vorzugsweise im CAD-Modell rein durch Freiformflächen modelliert (z.B. mit Hilfe von Non-Uniform Rational B-Splines, siehe z.B. den gleichlautenden Eintrag in "Wikipedia" am 14.04.08), so dass ihre Oberfläche eine freiformflächenartige Geometrie aufweist.

Unter einer Modellierung durch Freiformflächen im Sinne dieser Erfindung ist zu verstehen, dass die Fläche nicht einer durchgehenden Symmetrie unterliegt, was ebenfalls zur Versteifung und zu einer Verringerung zur Schwingungsneigung im Fahrbetrieb mit beiträgt.

Wie in Fig. 2 erkennbar, ist damit insbesondere im Bereich der axialen Seitenwandbereiche 6, 7 der Abstand dieser Bereiche zur Bremsscheibe nicht konstant parallel und auch nicht konstant winklig. Die Bremsscheibenabdeckung 1 weist vielmehr eine Art geschwungene, in sich gekrümmte Formgebung auf, wobei die Seitenwandbereiche 6, 7 aber an jeder Stelle zur Bremsscheibenoberfläche genügend beabstandet sind. Derart ist ein besonders günstiges Schwingungsverhalten erreicht.

Es ist vorteilhaft, wenn sich in den Seitenwandbereichen 6, 7 jeweils eine Art bogenförmige Vertiefung 14, um den Mittelpunkt der Bremsscheibe gekrümmt verlaufend, in der Bremsscheibenabdeckung ausgebildet wird (Bezierfunktion).

Die vorzugsweise zwei Teile 2, 3 der Bremsscheibenabdeckung 1 werden wiederum vorzugsweise aus einer Blechplatine gestanzt und sodann umformend in die Kontur der Bremsscheibenabdeckungsteile gebogen.

Alternativ ist auch eine Herstellung aus einem anderen Werkstoff, insbesondere aus einem Verbundwerkstoff denkbar.

Es ist ferner sowohl eine einstückige Ausgestaltung denkbar als auch die dargestellte zweistückige Ausgestaltung möglich.

Die zweistückige Gestaltung bietet den Vorteil einer besonders einfachen Herstellbarkeit, wobei der Grundwandbereich 8 dann wiederum zumindest abschnittsweise bevorzugt aus zwei sich in diesem Bereich überlappenden Wandungsabschnitten besteht.

Die zweistückige Ausgestaltung bietet insbesondere auch die Möglichkeit dazu, durch ein Überlappen der zwei die Bremsscheibenabdeckung bildenden Teilstücke 2, 3 auf einfache Weise wenigstens eines oder mehrere Labyrinthanordnung(en) 11 zu realisieren, die einerseits das Eindringen von Schmutz hemmen aber andererseits einen Austritt von doch in den Bereich der Bremsscheibe gelangten Schmutzpartikeln erlauben. Es kann ein einziges Labyrinth vorgesehen sein oder aber es werden mehrere in Umfangsrichtung voneinander beabstandete Labyrinthe an der Bremsscheibe ausgebildet.

Vorzugsweise ist die wenigstens eine Labyrinthanordnung 11 in dem sich außerhalb des Bremsscheibenumfangs parallel erstreckenden Grundwandbereich 8 und dort wiederum vorzugsweise mittig ausgebildet, d.h. der Grundwandbereich 8 besteht aus zwei sich abschnittsweise überlappenden Grundwandabschnitten 8a, 8b, die jeweils an die Seitenwandbereiche 6, 7 tangential anschließen. Der Übergang zwischen den Grundwandabschnitten 8a, 8b und den Seitenwandbereichen 6, 7 ist vorzugsweise stetig, insbesondere geschwungen, nicht eckig und weiter vorzugsweise freimformflächenartig konstruiert.

Vorzugsweise ist das Labyrinth 11 derart ausgerichtet, dass seine radial äußere Öffnung 12 im montierten Zustand axial zur Fahrzeuginnenseite gewandt ist.

Die Labyrinthanordnung 11 sichert auch eine besonders gute Belüftung der Bremsscheibe 12, um diese zu kühlen. Steine und andere größere Partikel können nicht oder nur schwer in das Innere der Bremsscheibenabdeckung 1 gelangen.

Es ist auch denkbar, das (Schmutz-)Labyrinth 11 mit taschenartigen Aufnahmebereichen für anfallenden Bremsstaub zu versehen, um diesen leichter entsorgen zu können (hier nicht dargestellt).

Eine weitere herausragende Besonderheit der dargestellten Bremsscheibenabdeckung besteht in der gewählten Umfangskontur.

Die Umfangskontur ist vorzugsweise innen (bei 15) sowie außen (bei 16) nicht teilkreisförmig sondern gegenüber einer Teilkreiskontur jedenfalls über einen Teil der Umfangserstreckung hinweg abgeflacht ausgebildet.

Die maximale Erstreckung der Bremsscheibenabdeckung 1 ist hier im Bereich der Verschraubungen mit dem Bremsträger 4 gegeben. In diesem Bereich weist die Bremsscheibenabdeckung jeweils einen Radius R1 auf.

Ausgehend von diesen beiden Bereichen nimmt der Radius des Außenumfangs mit zunehmendem Abstand von den Verschraubungsbereichen jeweils ab. In dem in Fig. 1 untersten, mittig zwischen den Verschraubungen liegenden Außenumfangsbereich ist der Radius R2 am geringsten, d.h., es gilt:

$$R2 < R1.$$

Der Radius nimmt vorzugsweise nicht konstant ab.

Vorzugsweise ist die Umfangskontur derart halbelliptisch bzw. halboval abgeflacht ausgebildet, wobei sie aber an jeder Stelle einen größeren Umfangsradius aufweisen muss als die Bremsscheibe mit dem Radius RB und dem Mittelpunkt M. Derart wird in einfacher Weise die Masse optimiert verteilt, indem sie bereichsweise näher zum Mittelpunkt gelegt wird als bei einer Anordnung, bei welcher der Außenumfang durchgehend auf dem Kreis mit dem Radius R1 liegt.

**Bezugszeichen**

| | |
|---|---|
| Bremsscheibenabdeckung | 1 |
| Abdeckungsteile | 2, 3 |
| Bremsträger | 4 |
| Bohrungen | 5 |
| Seitenwandbereiche | 6,7 |
| Grundwandbereich | 8 |
| Grundwandabschnitte | 8a, 8b |
| Schrauben | 9 |
| Öffnungen | 10 |
| Schmutzlabyrinth | 11 |
| Bremsscheibe | 12 |
| Belagschacht | 13 |
| Vertiefung | 14 |
| Umfangskontur | 15, 16 |

**Patentansprüche**

1. Bremsscheibenabdeckung (1) für eine Bremsscheibe (12) einer Scheibenbremse, welche an einem während einer Fahrt drehfesten Bauteil eines Fahrzeugs angeordnet ist und welche vorzugsweise trogartig den Umfangsrand der Bremsscheibe mit einem Radius (RB) jedenfalls abschnittsweise einfasst, wobei:

   a. zwei Seitenwandbereiche (6, 7) auf einander direkt gegenüberliegenden Axialseitenabschnitten der abzudeckenden Bremsscheibe (12), welche zumindest einen Teilbereich der Axialseiten der Bremsscheibe (12) abdecken und
   b. einen diese seitlichen Wandbereiche verbindenden Grundwandbereich (8), der den Umfangsrand der Bremsscheibe (12) abdeckt,
c. wobei die Seitenwandbereiche (6, 7) derart winklig zueinander ausgerichtet sind, dass der Abstand zwischen diesen beiden Seitenwandbereichen (6, 7) radial von inneren Umfangsrand der Seitenwandbereich zum äußeren Umfangsrand der Bremsscheibenabdeckung hin abnimmt,
**dadurch gekennzeichnet, dass**
d. die Bremsscheibenabdeckung eine nicht einer mathematischen Symmetrie folgende Oberflächenkontur aufweist, und
e. die Bremsscheibenabdeckung einen zwei- oder mehrteiligen Aufbau aufweist, wobei durch sich überlappende Wandabschnitte wenigstens eine Labyrinthanordnung (11) zumindest zum Belüften an der Bremsscheibenabdeckung realisiert ist.

2. Bremsscheibenabdeckung (1) nach Anspruch 1, **dadurch gekennzeichnet, dass** sie wenigstens einen in sich geschwungenen, nicht ebenen Seitenwandbereich (6, 7) aufweist.

3. Bremsscheibenabdeckung (1) nach einem der vorstehenden Ansprüche, **dadurch gekennzeichnet, dass** die äußere und/oder die innere Umfangskontur (15, 16) der Bremsscheibenabdeckung (1) jedenfalls abschnittsweise nicht teilkreisförmig sondern von einer Teilkreiskontur abweichend ausgebildet ist.

4. Bremsscheibenabdeckung (1) nach Anspruch 3, **dadurch gekennzeichnet, dass** die äußere und/oder die innere Umfangskontur (15, 16) teiloval ausgestaltet ist.

5. Bremsscheibenabdeckung (1) nach Anspruch 4, **dadurch gekennzeichnet, dass** die äußere und/oder die innere Umfangskontur (15, 16) teilelliptisch ausgestaltet ist.

6. Bremsscheibenabdeckung (1) nach Anspruch 4 oder 5, **dadurch gekennzeichnet, dass** der äußere und/oder der innere Radius der Bremsscheibenabdeckung in Bereichen, in welchen sie am achsfesten Bauteil befestigt ist, maximal ist.

7. Bremsscheibenabdeckung (1) nach einem der vorstehenden Ansprüche, **dadurch gekennzeichnet, dass** die sich überlappenden Wandabschnitte (8a, 8b) im Bereich der Grundwand (8) der Bremsscheibe ausgebildet sind.

8. Bremsscheibenabdeckung (1) nach Anspruch 7, **dadurch gekennzeichnet, dass** die mehreren der sich überlappenden Wandabschnitte und damit mehrere der Labyrinthanordnungen (11) im Bereich der Grundwand der Bremsscheibe ausgebildet sind.

9. Bremsscheibenabdeckung (1) nach Anspruch 8, **dadurch gekennzeichnet, dass** die sich überlappenden Wandabschnitte in dem Umfangsbereich zwischen den Labyrinthanordnungen (11) miteinander verbunden sind.

10. Bremsscheibenabdeckung (1) nach einem der vorstehenden Ansprüche, **dadurch gekennzeichnet, dass** sie mit zueinander winklig ausgerichteten Befestigungsmitteln an dem achsfesten Bauteil, insbesondere dem Bremsträger, befestigt ist.

11. Bremsscheibenabdeckung (1) nach Anspruch 10, **dadurch gekennzeichnet, dass** die zueinander winklig ausgerichteten Befestigungsmittel Schrauben (9) aufweisen.

12. Bremsscheibenabdeckung (1) nach Anspruch 10 oder 11, **dadurch gekennzeichnet, dass** die zueinander winklig ausgerichteten Befestigungsmittel Nieten aufweisen.

13. Bremsscheibenabdeckung (1) nach einem der Ansprüche 10 bis 12, **dadurch gekennzeichnet, dass** die zueinander winklig ausgerichteten Befestigungsmittel wenigstens ein Löt-, Schweiß- und/oder Klemmbereich sind.

14. Bremsscheibenabdeckung (1) nach einem der Ansprüche 10 bis 13, **dadurch gekennzeichnet, dass** die Befestigungsmittel rechtwinklig zueinander ausgerichtet sind.

15. Bremsscheibenabdeckung (1) nach Anspruch 13 oder 14, **dadurch gekennzeichnet, dass** jeweils wenigstens eines der Befestigungsmittel radial und wenigstens eines der Befestigungsmittel axial - bezogen auf die Bremsscheibenachse (M) der Bremsscheibe (12) - ausgerichtet sind.

16. Bremsscheibenabdeckung (1) nach Anspruch 15, **dadurch gekennzeichnet, dass** sie zweiteilig ausgestaltet ist und dass das eine der Bremsscheibenteile (2, 3) nur mit den radial ausgerichteten Befestigungsmitteln (9a) und das andere Bremsscheibenabdeckteile nur mit den axial ausgerichteten Befestigungsmitteln am achsfesten Bauteil befestigt ist.

17. Bremsscheibenabdeckung (1) nach Anspruch 16, **dadurch gekennzeichnet, dass** die Bremsscheibenabdeckteile abschnittsweise miteinander verbunden, insbesondere verschweißt sind.

18. Bremsscheibenabdeckung (1) nach einem der vorstehenden Ansprüche, **dadurch gekennzeichnet, dass** sie mit als Senkkopfschrauben ausgebildeten Befestigungsmitteln an einem achsfesten Bauteil, insbesondere einem Bremsträger, befestigt ist.

**Claims**

1. Brake disc cover (1) for a brake disc (12) of a disc brake, which is disposed on a component of a vehicle that is rotationally fixed during a journey and which encloses the peripheral edge of the brake disc with a radius (RB) at least in sections, preferably in a trough-like fashion, wherein

   a. two side wall areas (6, 7) on axial side sections of the brake disc (12) to be covered that are directly opposite each other cover at least a partial area of the axial sides of the brake disc (12), and
   b. a base wall area (8), which connects these lateral wall areas, covers the peripheral edge of the brake disc (12),
   c. wherein the side wall areas (6, 7) are oriented at an angle to each other in such a way that the distance between these two side wall areas (6, 7) decreases radially from the inner peripheral edge of the side wall areas to the outer peripheral edge of the brake disc cover,
   **characterised in that**
   d. the brake disc cover has a surface contour which does not correspond to a mathematical symmetry,
   e. the brake disc cover has a two- or multi-part structure wherein at least one labyrinth arrangement (11) is implemented by overlapping wall sections at least for ventilation at the brake disc cover.

2. Brake disc cover (1) according to claim 1, **characterised in that** it has at least one curved, non-flat side wall area (6, 7).

3. Brake disc cover (1) according to any of the preceding claims, **characterised in that** the outer and/or the inner peripheral contour (15, 16) of the brake disc cover (1) do/es at least in sections not have the shape of a circular arch but deviate from a circular arch contour.

4. Brake disc cover (1) according to claim 3, **characterised in that** the outer and/or the inner peripheral contour (15, 16) is/are designed to be partially oval-shaped.

5. Brake disc cover (1) according to claim 4, **characterised in that** the outer and/or the inner peripheral contour (15, 16) is/are designed to be partially elliptical.

6. Brake disc cover (1) according to claim 4 or 5, **characterised in that** the outer and/or the inner radius of the brake disc cover is/are at its maximum in the areas in which it is fixed to the component fixed to the axle.

7. Brake disc cover (1) according to any of the preceding claims, **characterised in that** the overlapping wall sections (8a, 8b) are formed in the area of the base wall (8) of the brake disc.

8. Brake disc cover (1) according to claim 7, **characterised in that** the majority of the overlapping wall sections and therefore the majority of the labyrinth arrangements (11) are formed in the area of the base wall of the brake disc.

9. Brake disc cover (1) according to claim 8, **characterised in that** the overlapping wall sections are joined to one another in the peripheral area between the labyrinth arrangements (11).

10. Brake disc cover (1) according to any of the preceding claims, **characterised in that** it is secured to a component fixed to the axle, in particular the backing plate, by securing means oriented at an angle relative to one another.

11. Brake disc cover (1) according to claim 10, **characterised in that** the securing means oriented at an angle relative to one another comprise screws (9)..

12. Brake disc cover (1) according to claim 10 or 11, **characterised in that** the securing means oriented at an angle relative to one another comprise rivets.

13. Brake disc cover (1) according to any of claims 10 to 12, **characterised in that** the securing means oriented at an angle relative to one another represent at least one soldering, welding and/or clamping area.

14. Brake disc cover (1) according to any of claims 10 to 13, **characterised in that** the securing means are oriented perpendicular relative to one another.

15. Brake disc cover (1) according to claim 13 or 14, **characterised in that** at least one of the securing means is oriented radially and at least one of the securing means is oriented axially - relative to the brake disc axis (M) of the brake disc (12).

16. Brake disc cover (1) according to claim 15, **characterised in that** it is designed in two parts, and **in that** one of the brake disc cover parts (2, 3) is secured by the radially oriented securing means (9a) only and the other brake disc cover part is secured by the axially oriented securing means only to the component fixed to the axle.

17. Brake disc cover (1) according to claim 16, **characterised in that** the brake disc cover parts are joined, in particular welded, to one another in sections.

18. Brake disc cover (1) according to any of the preceding claims, **characterised in that** it is secured to a component fixed to the axle, in particular to a backing plate, by securing means designed as countersunk head screws.


**Revendications**

1. Capot (1) pour un disque (12) d'un frein à disques, qui est monté sur un élément d'un véhicule fixe en rotation pendant un trajet et qui entoure, de préférence à la manière d'une auge, le bord périphérique du disque de frein d'un rayon (RB), en tout cas par tronçons, dans lequel :

   a. deux zones (6, 7) de paroi latérale sur des tronçons de côté axiaux opposés directement l'un à l'autre du disque (12) de frein à capoter, qui recouvrent au moins une zone partielle des côtés,axiaux du disque (12) de frein et
   b. une zone (8) de paroi de base, qui relie ces zones de paroi latérale et qui recouvre le bord périphérique du disque (12) de frein,
   c. dans lequel les zones (6, 7) de paroi latérale sont dirigées en faisant un angle entre elles, de manière à ce que la distance entre ces deux zones (6, 7) de paroi latérale diminue radialement du bord périphérique intérieur de la zone de paroi latérale au bord périphérique extérieur du capot du disque de frein,
   **caractérisé en ce que**
   d. le capot de disque de frein a un contour de surface ne suivant pas une symétrie mathématique, et
   e. le capot de disque de frein a une structure en deux parties ou en plusieurs parties, au moins un agencement (11) en labyrinthe, au moins pour l'aération du capot de disque de frein, étant réalisé par des parties de paroi se chevauchant.

2. Capot (1) de disque de frein suivant la revendication 1, **caractérisé en ce qu'**il a au moins une zone (6, 7) de paroi latérale non plane, en soi arquée.

3. Capot (1) de disque de frein suivant l'une des revendications précédentes, **caractérisé en ce que** le contour (15, 16) périphérique extérieur et/ou intérieur du capot (1) de disque de frein est constitué, au moins par tronçons, en n'ayant pas une forme de partie de cercle, mais en s'écartant d'un contour en forme de partie de cercle.

4. Capot (1) de disque de frein suivant la revendication 3, **caractérisé en ce que** le contour (15, 16) périphérique extérieur et/ou intérieur est conformé en partie d'ovale.

5. Capot (1) de disque de frein suivant la revendication 4, **caractérisé en ce que** le contour (15, 16) périphérique extérieur et/ou intérieur est conformé en partie d'ellipse.

**6.** Capot (1) de disque de frein suivant les revendications 4 ou 5, **caractérisé en ce que** le rayon extérieur et/ou le rayon intérieur du capot de disque de frein est maximum dans des zones dans lesquelles il est fixé à l'élément fixe sur l'axe.

**7.** Capot (1) de disque de frein suivant l'une des revendications précédentes, **caractérisé en ce que** les parties (8a, 8b) de paroi qui se chevauchent sont constituées dans la zone de la paroi (8) de base du disque de frein.

**8.** Capot (1) de disque de frein suivant la revendication 7, **caractérisé en ce que** les plusieurs parties de paroi qui se chevauchent et ainsi plusieurs des agencements (11) de labyrinthe sont constitués dans la zone de la paroi de base du disque de frein.

**9.** Capot (1) de disque de frein suivant la revendication 8, **caractérisé en ce que** les parties de paroi qui se chevauchent sont reliées entre elles dans la zone périphérique entre les agencements (11) de labyrinthe.

**10.** Capot (1) de disque de frein suivant l'une des revendications précédentes, **caractérisé en ce qu'**il est fixé sur l'élément fixé sur l'axe, notamment sur le porte-frein, par des moyens de fixation orientés suivant un angle l'un par rapport à l'autre.

**11.** Capot (1) de disque de frein suivant la revendication 10, **caractérisé en ce que** les moyens de fixation orientés suivant un angle l'un par rapport à l'autre, ont des vis (9).

**12.** Capot (1) de disque de frein suivant les revendications 10 ou 11, **caractérisé en ce que** les moyens de fixation orientés suivant un angle l'un par rapport l'autre ont des rivets.

**13.** Capot (1) de disque de frein suivant l'une des revendications 10 à 12, **caractérisé en ce que** les moyens de fixation orientés suivant un angle l'un par rapport à un autre sont au moins une zone de brasure, de soudure et/ou de serrage.

**14.** Capot (1) de disque de frein suivant l'une des revendications 10 à 13, **caractérisé en ce que** les moyens de fixation sont orientés l'un par rapport à l'autre suivant un angle droit.

**15.** Capot (1) de disque de frein suivant les revendications 10 ou 13, **caractérisé en ce que**, respectivement, au moins l'un des moyens de fixation est dirigé radialement et, au moins l'un des moyens de fixation est dirigé axialement, rapporté à l'axe (M) du disque (12) de frein.

**16.** Capot (1) de disque de frein suivant la revendication 15, **caractérisé en ce qu'**il est conformé en deux parties, et **en ce que** l'une des parties (2, 3) du disque de frein n'est fixée que par les moyens (9a) de fixation dirigés radialement et **en ce que** l'autre partie de capot de disque de frein n'est fixée sur l'élément fixe sur l'axe que par les moyens de fixation dirigés axialement.

**17.** Capot (1) de disque de frein suivant la revendication 16, **caractérisé en ce que** les parties du capot de disque de frein sont reliées entre elles par tronçons, en étant notamment soudées.

**18.** Capot (1) de disque de frein suivant l'une des revendications précédentes, **caractérisé en ce qu'**il est fixé sur un élément fixe sur l'axe, notamment sur un support de frein, par des moyens de fixation constitués sous la forme de vis à tête moyée.

Fig. 1

Fig. 2

Fig. 3

10

10

13

5

9b

7

9a

9

Fig. 4

11

11

8

Fig. 5

14

14

11

4

3

2

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10155645 A1
- DE 10348001 A1
- EP 1191245 A2
- EP 1577578 B1
- SE 523603 C2
- MX PA05012473 A
- EP 0786606 A